# EUROPÄISCHE PATENTANMELDUNG

(11) **EP 4 336 437 A2**
(43) Veröffentlichungstag der Anmeldung: **13.03.2024**
(21) Anmeldenummer: 24154890.8
(22) Anmeldetag: 09.07.2019
(51) Int. Cl.: G06Q 30/0645

(54) **VERFAHREN ZUR EFFIZIENTEN OPTIMIERUNG VON SPEICHERBELEGUNGEN**

(62) Teilanmeldung aus: 19020421.4
(71) Anmelder: Patentpool Innovations Management GmbH, 80331 München (DE)
(72) Erfinder: SCHNEIDER, Christoph, 36100 Petersberg (DE)
(74) Vertreter: Reich, Jochen

(57) **Zusammenfassung**

Die vorliegende Erfindung ist auf ein Verfahren zur effizienten Optimierung von Speicherbelegungen gerichtet, welches es ermöglicht, dass in einem Computernetzwerk vorhandene Ressourcen effizient genutzt werden können und hierbei die benötigte Bandbreite optimiert werden kann. Darüber hinaus ist es erfindungsgemäß ermöglicht, dass die Daten während des Auslagerns anonymisiert bzw. durch ein Segmentieren implizit verschlüsselt werden. Dies kann effizient zur Laufzeit erfolgen. Die vorliegende Erfindung ist ebenfalls auf ein Netzwerkprotokoll gerichtet sowie auf ein Computerprogrammprodukt. Darüber hinaus wird eine analog eingerichtete Systemanordnung vorgeschlagen.

## Beschreibung

Die vorliegende Erfindung ist auf ein Verfahren zur effizienten Optimierung von Speicherbelegungen gerichtet, welches es ermöglicht, dass in einem Computernetzwerk vorhandene Ressourcen effizient genutzt werden können und hierbei die benötigte Bandbreite optimiert werden kann. Darüber hinaus ist es erfindungsgemäß ermöglicht, dass die Daten während des Auslagerns anonymisiert bzw. durch ein Segmentieren implizit verschlüsselt werden. Dies kann effizient zur Laufzeit erfolgen. Die vorliegende Erfindung ist ebenfalls auf ein Netzwerkprotokoll gerichtet sowie auf ein Computerprogrammprodukt. Darüber hinaus wird eine analog eingerichtete Systemanordnung vorgeschlagen.

DE 11 2014 000 471 T5 zeigt das Auslagern von Datenverkehr durch eine kabellose Kommunikationsvorrichtung von einer Mobilfunkverbindung zu einer kabellosen Peer-to-Peer(P2P)-Verbindung.

Aus dem Stand der Technik sind sogenannte Client-Server-Architekturen bekannt, die vorsehen, dass einer Server größere Mengen an Daten bereitstellt und diese an mindestens einen Client übermittelt. Generell tritt hierbei jedoch das Problem auf, dass der Client typischerweise über geringe Datenraten verfügt und typischerweise derart angeschlossen sind, dass die Download-Rate höher ist, als die Upload-Rate. Soll also nunmehr Speicherplatz aus einer Vorrichtung innerhalb des Haushalts freigegeben werden, so besteht das Problem, dass die externe Komponente die Daten nur über die schmalbandige Upload-Schnittstelle erhalten kann. Somit ist es gemäß dem Stand der Technik ineffizient entsprechende Speichervorrichtungen zu nutzen.

Weiterhin sind aus dem Stand der Technik sogenannte Tauschbörsen bekannt, bei denen ein Nutzer eine Datei zum Download bereitstellt und diese Datei wird von mehreren Nutzern heruntergeladen. Dieses Anwendungsszenario sieht jedoch vor, dass die Recheneinheit, welche die Datei bereitstellt, diese Datei nicht löscht, sondern vielmehr wird diese weiterhin im Speicher vorgehalten und als Tauschware für weitere Downloads vorgehalten. Somit besteht das Problem, dass der entsprechende Speicher auf der Recheneinheit nicht freigegeben werden kann und typischerweise verbindet sich eine anfragende Recheneinheit lediglich mit einer einzigen anbietenden Recheneinheit. Hier kann zwar generell die schnellste Datenverbindung ausgewählt werden, diese bleibt jedoch limitiert und die niedrigen Upload-Geschwindigkeiten wirken sich weiter nachteilig aus. Ein Auslagern von Daten sieht dieses Anwendungsszenario nicht vor.

Darüber hinaus besteht das Problem im Stand der Technik, dass Daten oftmals sensible Inhalte aufweisen und somit einem Auslagern über das Netzwerk nicht zugänglich sind. Hier müssen aufwändige Verschlüsselungstechniken zum Einsatz kommen, welche wiederum Rechenkapazität benötigen. In diesem Zusammenhang ist die sogenannte Blockchain bekannt, welche Daten redundant abspeichert. Hierbei ist es jedoch auch möglich, dass die einzelnen abspeicherten Recheneinheiten Einblick in die Daten bekommen.

Folglich besteht Bedarf an einem neuartigen Verfahren, welches es ermöglicht, dass eine Recheneinheit größere Datenmengen auslagert und die Daten über einen schnellen Kommunikationskanal wieder erhält. Darüber hinaus besteht ein Bedarf daran, dass das Verfahren vorsieht, dass mit geringem technischem Aufwand die zu verteilenden Daten anonymisiert bzw. unzugänglich gemacht werden. So kann es auch vorgesehen sein, dass sensible Daten ausgelagert werden müssen und hierbei soll sichergestellt werden, dass die empfangenden Recheneinheiten keinen Zugriff auf entsprechende Inhalte bekommen, auch wenn sie die Datenpakete abspeichern.

Somit ist es eine Aufgabe der vorliegenden Erfindung ein Verfahren bereitzustellen, welches eine Optimierung der Speicherbelegung vorsieht, wobei sicherzustellen ist, dass keine zusätzlichen Hardwarekomponenten benötigt werden und das Verfahren effizient betrieben werden kann. Darüber hinaus soll es möglich sein, dass die Recheneinheit, welche Dateien auslagert, diese über eine breitbandige Verbindung wieder erhält. Ferner soll das entsprechende Verfahren gewährleisten, dass sensible Inhalte unzugänglich verteilt werden können. Ferner ist es eine Aufgabe der vorliegenden Erfindung ein entsprechendes Netzwerkprotokoll bzw. ein Computerprogrammprodukt bereitzustellen sowie eine Systemanordnung, die dem Verfahren analog ausgestaltet ist.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zur effizienten Optimierung von Speicherbelegungen und Bandbreitenausnutzungen in heterogenen und verteilten Rechnernetzwerken vorgeschlagen, aufweisend ein Abspeichern einer Menge von Nutzdaten auf einer Speicherplatz anfragenden Recheneinheit, ein Segmentieren der Menge von Nutzdaten zur Erzeugung von Nutzdatensegmenten, ein Identifizieren einer Mehrzahl von Speicherplatz anbietenden Recheneinheiten, welche in ihrer Gesamtheit eingerichtet sind die Nutzdatensegmente abzuspeichern, ein Auslagern der Nutzdatensegmente an die Speicherplatz anbietenden Recheneinheiten, derart, dass die Menge von Nutzdaten in dem Rechnernetzwerk verteilt abgespeichert wird und ein kollektives Übermitteln der Nutzdatensegmente von den Speicherplatz anbietenden Recheneinheiten an die Speicherplatz anfragende Recheneinheiten auf deren Anfrage zur Wiederherstellung der Menge von Nutzdaten.

### Das vorgeschlagene Verfahren ist effizient, da keine weiteren

Hardwarekomponenten benötigt werden, die in einem typischen Rechnernetzwerk nicht vorhanden wären. So kann erfindungsgemäß beispielsweise auf das Internet zurückgegriffen werden und die Recheneinheiten können als Computer implementiert werden. Die Speicherbelegungen werden dahingehend optimiert, dass eine zentrale Recheneinheit, nämlich die Speicherplatz anfragende Recheneinheit, Speicher anderer Recheneinheiten, nämlich der Speicherplatz anbietenden Recheneinheiten, belegen kann und somit können größere Daten ausgelagert werden. Hierbei kommt es ebenfalls zu einer Optimierung der Bandbreitennutzung, da die anbietenden Recheneinheiten zwar generell über geringere Upload-Geschwindigkeiten verfügen, dafür werden diese jedoch kumuliert eingesetzt und entsprechende Daten werden auf diesen Einheiten verteilt. Somit ist es möglich Teile der Nutzdaten parallel hochzuladen und somit die verfügbare Upload-Geschwindigkeit zu multiplizieren.

Das zugrunde liegende Rechnernetzwerk ist potentiell heterogen, was darauf abstellt, dass unterschiedliche Hardwareformate genutzt werden können. So kann beispielsweise ein Personal Computer eines privaten Nutzers einen Speicherplatz anbieten und zudem kann eine zentrale Speichereinheit eines Haushalts Speicherplatz anbieten. Generell ist es möglich auch mobile Endgeräte anzubinden, welche über eine entsprechende Schnittstelle verfügen. Folglich können die Nutzdatensegmente über das Netzwerk verteilt werden und falls die zentrale Recheneinheit die Dateien wieder benötigt, können diese über mehrere Kanäle wieder heraufgeladen werden.

Damit entsprechende Nutzdaten ausgelagert bzw. verteilt werden können, werden diese in einem vorbereitenden Verfahrensschritt auf der anfragenden Recheneinheit abgespeichert. Bei der anfragenden Recheneinheit handelt es sich um die zentrale Recheneinheit. Die Menge der Nutzdaten ist generell unbegrenzt und folglich kann jegliche Art von Nutzdaten auf der anfragenden Recheneinheit abgespeichert werden. Hierbei kann es sich um eine einzelne Datei oder aber auch um eine Vielzahl von Dateien handeln. Generell kann auch eine einzelne Datei derart aufgesplittet werden, dass diese auf einer Mehrzahl von Recheneinheiten abgespeichert werden kann.

Die Menge der Nutzdaten wird segmentiert und somit werden Nutzdatensegmente erzeugt. Die einzelnen Nutzdatensegmente sind typischerweise nicht interpretierbar, da um eine entsprechende Semantik auszulesen generell der komplette Datensatz benötigt wird, d.h. also alle Nutzdatensegmente. Dies schafft den Vorteil, dass die Nutzdaten nicht gesondert verschlüsselt werden müssen, sondern vielmehr werden diese lediglich derart segmentiert, dass die einzelnen Nutzdatensegmente an sich keinerlei Inhalt preisgeben. Lediglich bei einem Zusammenfügen aller Nutzdatensegmente in der zentralen Einheit, d.h. der anfragenden Recheneinheit, können die Daten interpretiert werden. Typischerweise ist hierzu ein Dateiformat vorgesehen, welches angibt, wie die Nutzdatensegmente zusammenzuführen sind. So kann ein entsprechendes Dateiformat einen Kopfrahmen vorsehen und Nutzdatenrahmen. Folglich können die einzelnen Nutzdatenrahmen nicht gesondert interpretiert werden und es ist der entsprechende Kopfrahmen vorzuhalten.

Auf diese Weise wird erfindungsgemäß sichergestellt, dass die Nutzdaten vertraulich verteilt werden können und hierzu wird der Nachteil im Stand der Technik überwunden, dass entsprechende Fragmente erst verschlüsselt werden müssen. Allein durch die Segmentierung bestehen bereits eine Anonymisierung und eine Verschleierung der Inhalte.

Daraufhin erfolgt ein Identifizieren einer Mehrzahl von Speicherplatz anbietenden Recheneinheiten, welche in ihrer Gesamtheit eingerichtet sind die Nutzdatensegmente abzuspeichern. Dies heißt, dass eine Mehrzahl von Recheneinheiten gesucht wird, wobei jede Recheneinheit mindestens ein Nutzdatensegment abspeichern kann. Folglich muss diese Recheneinheit genug Speicherplatz vorhalten um das Nutzdatensegment abspeichern zu können. Werden beispielsweise die Nutzdaten in fünf Nutzdatensegmente unterteilt, so kann es möglich sein, dass fünf anbietende Recheneinheiten identifiziert werden und folglich wird auf jeder Recheneinheit ein Nutzdatensegment abgespeichert. Es ist jedoch auch möglich, dass vier Recheneinheiten identifiziert werden und somit muss eine Recheneinheit zwei Nutzdatensegmente abspeichern. Relevant ist hierbei insgesamt nur, dass die identifizierten Recheneinheiten die gesamten Nutzdaten abspeichern.

Sodann erfolgt ein Auslagern der Nutzdatensegmente an die speicherplatzanbietenden Recheneinheiten, derart, dass die Menge von Nutzdaten in dem Rechnernetzwerk verteilt abgespeichert wird. Folglich übermittelt die zentrale Einheit, nämlich die nachfragende Recheneinheit, die Nutzdaten an die anbietenden Recheneinheiten. Dies erfolgt datentechnisch über eine Kommunikationsleitung, bevorzugt über das Internet.

Tritt der Fall ein, dass die zentrale Recheneinheit die Nutzdaten benötigt, so werden diese in inverser Richtung wieder an die nachfragende Einheit übermittelt. Somit erfolgt nicht nur ein Auslagern der Nutzdaten sondern vielmehr wird sichergestellt, dass die zentrale Einheit diese Daten wieder erhält. Hierbei ist es besonders vorteilhaft, dass die Nutzdatensegmente auf diverse Recheneinheiten ausgelagert wurden und somit können die Nutzdaten kumuliert wieder an die anfragende Einheit übermittelt werden.

In dem aufgezeigten Beispiel der fünf Recheneinheiten, auf die die Nutzdaten ausgelagert werden ist es folglich möglich, dass fünf Datenleitungen genutzt werden können um die Nutzdaten wieder an die anfragende Einheit zu übermitteln. Somit wird der Nachteil im Stand der Technik überwunden, dass lediglich eine beschränkte Datenleitung zur Verfügung steht. Da die Upload-Geschwindigkeiten typischerweise niedriger sind als die Downloadgeschwindigkeiten kann es im Stand der Technik zu einem Engpass kommen, der erfindungsgemäß überwunden wird.

Generell kann jeder Recheneinheit, auf die ein Nutzdatensegment ausgelagert wurde dieses auch wieder bereitstellen und somit entspricht die Anzahl der genutzten anbietenden Recheneinheiten der Anzahl an Datenleitungen, die nunmehr dafür zur Verfügung stehen, dass die nachfragende Recheneinheit die Nutzdaten wieder erhält.

Zusammenfassend kann gefolgert werden, dass somit auf der nachfragenden Recheneinheit Speicherplatz eingespart werden kann und große Datenmengen können ausgelagert werden, ohne dass es zu dem Problem kommt, dass diese technisch aufwendig wieder zurückgeholt werden müssen. Somit wird die Speicherbelegung im Netzwerk insgesamt optimiert und nicht genutzte Kapazitäten werden genutzt.

Gemäß einem Aspekt der vorliegenden Erfindung ist eine verfügbare Bandbreite in einer Kommunikationsrichtung von der Speicherplatz anfragenden Recheneinheit zu der Speicherplatz anbietenden Recheneinheit größer als eine weitere verfügbare Bandbreite in einer Kommunikationsrichtung von der Speicherplatz anbietenden Recheneinheit zu der Speicherplatz anfragenden Recheneinheit. Dies hat den Vorteil, dass der Nachteil im Stand der Technik überwunden wird, dass die Upload-Geschwindigkeiten stark begrenzt sind und folglich kommt der erfindungsgemäße Vorteil besonders zum Tragen, dass eine Mehrzahl an Datenleitungen für das Heraufladen genutzt werden kann.

Gemäß einem weiteren Aspekt der vorliegenden Erfindung werden die Nutzdatensegmente verschlüsselt und/ oder unverschlüsselt übermittelt. Dies hat den Vorteil, dass Nutzdatensegmente bzw. die Menge an Nutzdaten teilweise verschlüsselt und teilweise unverschlüsselt übermittelt werden können. So können die Nutzdaten in zwei Arten von Segmenten unterteilt werden, nämlich diejenigen die verschlüsselt werden und diejenigen die nicht verschlüsselt werden. Generell ist es auch möglich alle Nutzdatensegmente zu verschlüsseln oder keine Nutzdatensegmente zu verschlüsseln. Der Fall in dem keine Nutzdatensegmente verschlüsselt werden ist dadurch abgesichert, dass diese wie beschrieben eben nur Segmente darstellen, die an sich alleine keinen Inhalt preisgeben.

Gemäß einem weiteren Aspekt der vorliegenden Erfindung werden die Nutzdatensegmente randomisiert aus der Menge von Nutzdaten erzeugt. Dies hat den Vorteil, dass die Nutzdatensegmente auf eine nicht nachvollziehbare Art und Weise hergestellt werden und folglich ist für eine Recheneinheit nicht ersichtlich, welches Nutzdatensegment es abspeichert. Folglich kann auch nicht auf den Inhalt des Nutzdatensegments zurückgegriffen werden.

Gemäß einem weiteren Aspekt der vorliegenden Erfindung erfolgt das Identifizieren der Mehrzahl von Speicherplatz anbietenden Recheneinheiten derart, dass die einzelnen Recheneinheiten anhand einer Metrik bewertet werden. Dies hat den Vorteil, dass genau die geeigneten anbietenden Recheneinheiten verwendet werden und es kann die entsprechende Leistung der einzelnen Recheneinheiten evaluiert werden. Somit wird sichergestellt, dass stets die performanten Recheneinheiten gewählt werden, die auch genug Hardwarekapazitäten bereitstellen.

Gemäß einem weiteren Aspekt der vorliegenden Erfindung evaluiert die Metrik Onlinezeit, verfügbaren Speicherplatz, Bandbreite und/ oder eine Anzahl von Übertragungsabbrüchen. Dies hat den Vorteil, dass besonders zuverlässige Recheneinheiten identifiziert werden können und zudem wird sichergestellt, dass Abbrüche vermieden werden.

Gemäß einem weiteren Aspekt der vorliegenden Erfindung wird vor einem Auslagern der Nutzdatensegmente ein Speicherplatz auf der jeweiligen Speicherplatz anbietenden Recheneinheiten reserviert, der einer Größe des auszulagernden Nutzdatensegments entspricht. Dies hat den Vorteil, dass zu jedem Zeitpunkt sichergestellt wird, dass der angefragte Speicherplatz auch tatsächlich verfügbar ist. Somit werden Adressräume freigehalten oder es wird eine Datei angelegt, die keinen semantischen Inhalt hat. Dies stellt sicher, dass der entsprechende Speicherplatz nicht anderweitig vergeben wird und falls das vorgeschlagene Verfahren auf diesen Speicher zugreifen will, wird der reservierte Speicherplatz entsprechend freigegeben.

Gemäß einem weiteren Aspekt der vorliegenden Erfindung ist für jede Speicherplatz anbietende Recheneinheit mindestens eine spiegelnde Recheneinheit vorgesehen. Dies hat den Vorteil, dass ein Ausfall einer Recheneinheit stets abgesichert ist und folglich ist für jede anbietende Recheneinheiten vorgesehen, dass eine weitere Recheneinheit betrieben wird, die ein Abbild dieses Speichers aufweist. Somit besteht zu jedem Nutzdatensegment ein Backup auf einer weiteren Recheneinheit.

Gemäß einem weiteren Aspekt der vorliegenden Erfindung wird bei einem Ausfall einer Recheneinheit eine weitere Recheneinheit adressiert. Dies hat den Vorteil, dass bei einem Ausfall der entsprechende Fehler nicht bemerkbar wird, sondern vielmehr wird diejenige Recheneinheit verwendet, die ein Spiegelbild der Nutzdatensegmente vorhält. Somit wird also eine Ersatzrecheneinheit verwendet.

Gemäß einem weiteren Aspekt der vorliegenden Erfindung können die Nutzdatensegmente zwischen Speicherplatz anbietenden Recheneinheiten weiter gegeben werden. Dies hat den Vorteil, dass bei einem Ausfall einer Recheneinheit die Nutzdatensegmente an eine weitere Recheneinheit weitergegeben werden können und somit wird ein Backup erstellt. Somit kann das vorgeschlagene Verfahren selbsttätig den Speicher verwalten und sicherstellen, dass die Daten nicht verloren gehen.

Gemäß einem weiteren Aspekt der vorliegenden Erfindung speichert eine Speicherplatz anbietende Recheneinheit mindestens ein Nutzdatensegment ab. Dies hat den Vorteil, dass eine Recheneinheit auch mehrere Nutzdatensegmente abspeichern kann. Dies kann dynamisch zur Laufzeit geplant werden. Somit wird sichergestellt, dass der vorhandene Speicherplatz stets optimal verwendet wird.

Gemäß einem weiteren Aspekt der vorliegenden Erfindung sind die Speicherplatz anfragende Recheneinheit als ein Client und die Speicherplatz anbietenden Recheneinheiten jeweils als ein Peer implementiert. Dies hat den Vorteil, dass die Recheneinheiten hierarchisch aufgebaut werden können und die anbietenden Recheneinheiten bezüglich ihrer Rolle gleich ausgestaltet werden können. Die anfragende Recheneinheit nimmt wechselweise die Rolle eines Servers oder eines Clients ein, nämlich wenn sie die Daten bereitstellt bzw. wenn sie die Daten wieder zurück erhält.

Die Aufgabe wird auch gelöst durch ein Netzwerkprotokoll mit Steuerbefehlen, welche das Verfahren in einem verteilten Netzwerk ausführen.

Die Aufgabe wird auch gelöst durch ein Computerprogrammprodukt mit Steuerbefehlen, welche das Verfahren ausführen, wenn sie auf einem Computer zur Ausführung gebracht werden.

Die Aufgabe wird auch gelöst durch eine Systemanordnung zur effizienten Optimierung von Speicherbelegungen und Bandbreitenausnutzungen in heterogenen und verteilten Rechnernetzwerken, aufweisend eine Schnittstelleneinheit eingerichtet zum Abspeichern einer Menge von Nutzdaten auf einer Speicherplatz anfragenden Recheneinheit, eine Segmentierungseinheit eingerichtet zum Segmentieren der Menge von Nutzdaten zur Erzeugung von Nutzdatensegmenten, einer Vermittlungseinheit eingerichtet zum Identifizieren einer Mehrzahl von Speicherplatz anbietenden Recheneinheiten, welche in ihrer Gesamtheit eingerichtet sind die Nutzdatensegmente abzuspeichern, ein Netzwerk eingerichtet zum Auslagern der Nutzdatensegmente an die Speicherplatz anbietenden Recheneinheiten, derart, dass die Menge von Nutzdaten in dem Rechnernetzwerk verteilt abgespeichert wird und das Netzwerk eingerichtet zum kollektiven Übermitteln der Nutzdatensegmente von den Speicherplatz anbietenden Recheneinheiten an die Speicherplatz anfragende Recheneinheiten auf deren Anfrage zur Wiederherstellung der Menge von Nutzdaten.

Erfindungsgemäß ist es besonders vorteilhaft, dass die Systemanordnung strukturelle Merkmale bereitstellt, welche funktional den Verfahrensschritten entsprechen. Ferner werden Verfahrensschritte vorgeschlagen, welche strukturell auch von der Systemanordnung bezüglich der entsprechenden Funktionalität nachgebildet werden können. So dient das Verfahren dem Betreiben der Systemanordnung und die Systemanordnung kann das vor-geschlagene Verfahren ausführen.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Blockschaltbild der vorgeschlagenen Systemanordnung, wobei die Speicherplatz anfragende Recheneinheit als ein Server gemäß einem Aspekt der vorliegenden Erfindung implementiert ist;
- Figur 2:: ein schematisches Blockschaltbild der vorgeschlagenen Systemanordnung, wobei die Speicherplatz anfragende Recheneinheit als ein Client gemäß einem weiteren Aspekt der vorliegenden Erfindung implementiert ist;
- Figur 3:: ein schematisches Blockschaltbild der vorgeschlagenen Systemanordnung, wobei zwei anfragende Recheneinheiten vorliegen und spiegelnde Einheiten gemäß einem weiteren Aspekt der vorliegenden Erfindung vorgesehen sind; und
- Figur 4:: ein schematisches Ablaufdiagramm eines Verfahrens zur effizienten Optimierung von Speicherbelegungen und Bandbreitenausnutzungen gemäß einem weiteren Aspekt der vorliegenden Erfindung.

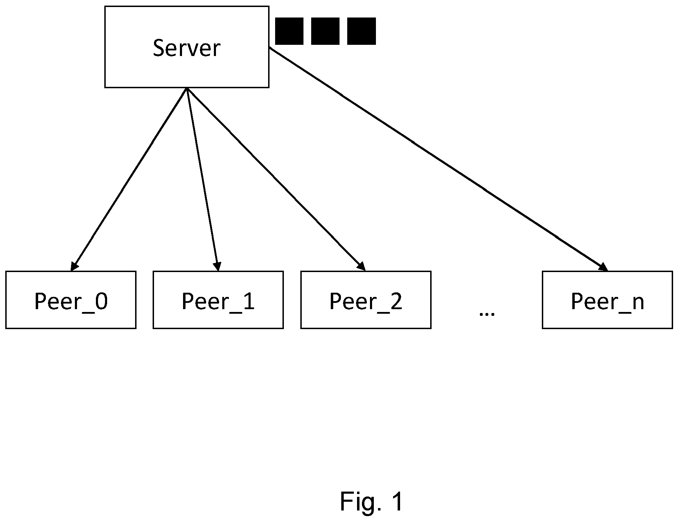

Figur 1 zeigt die vorgeschlagene Systemanordnung mit einem entsprechenden Kommunikationsverlauf. Die Kommunikation zwischen den Einheiten ist mittels gerichteter Pfeile eingezeichnet. So ist oben ein Server eingezeichnet, welcher der Speicherplatz anfragenden Recheneinheit entspricht. Diese zentrale Recheneinheit benötigt Speicherplatz und frägt somit bei den Speicherplatz anbietenden Recheneinheiten an. Diese sind vorliegend als Peer eingezeichnet. Wurden geeignete Recheneinheiten identifiziert, so wird die Menge von Nutzdaten von der Speicherplatz anfragenden Recheneinheit, oben, an die Speicherplatz anbietenden Recheneinheiten, unten, ausgelagert. Somit erfolgt eine Kommunikation in der vorliegenden Figur von oben nach unten.

Bei dem Server kann es sich um einen Server eines großen Unternehmens handeln, wobei die unteren Einheiten als Recheneinheiten in einem privaten Haushalt bereitgestellt werden können. Somit wird also der lokale Speicher in dem Server freigegeben und die Daten werden auf entfernte Clients ausgelagert. Jeder gerichtete Pfeil entspricht einer Datenkommunikation und folglich auch mindestens einem Nutzdatensegment, welches von oben nach unten übertragen wird. Die Nutzdatensegmente werden als schwarze Blöcke gezeigt. Vorliegend bilden die drei Blöcke drei Nutzdatensegmente, welche die Gesamtheit der Nutzdaten darstellen.

Zur Auslagerung der Datei müssen nicht alle anbietenden Recheneinheiten verwendet werden, sondern vielmehr werden erfindungsgemäß mittels einer Metrik die geeignetsten Recheneinheiten ausgewählt.

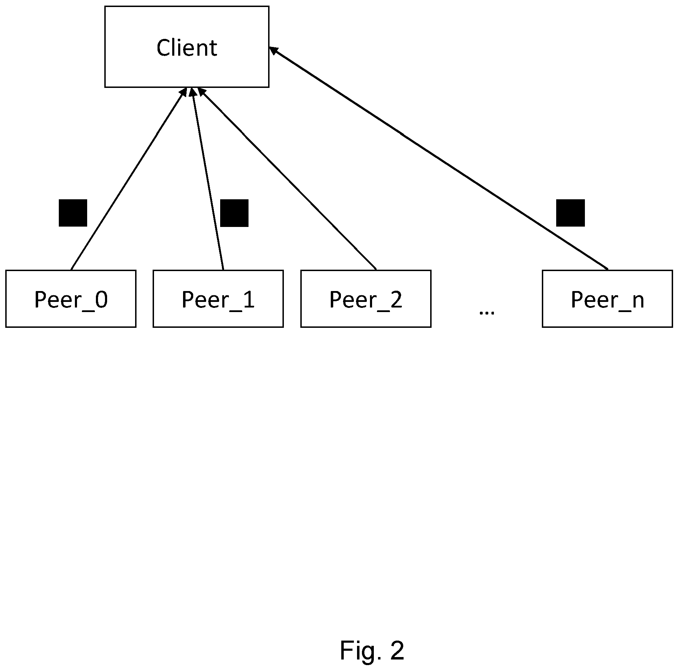

Figur 2 zeigt den umgekehrten Kommunikationsverlauf, wobei die Speicherplatz anfragende Recheneinheit nunmehr die Rolle eines Clients einnimmt. Die Recheneinheit benötigt die ausgelagerten Nutzdaten zurück und folglich werden diese kumuliert von den Speicherplatz anbietenden Recheneinheiten an die zentrale Recheneinheit zurück übertragen.

Hierbei ist der erfindungsgemäße Vorteil ersichtlich, dass zum Bereitstellen der Nutzdaten mehrere Datenleitungen verwendet werden können und somit wird ein Vielfaches einer herkömmlichen Bandbreite erreicht. Die zur Verfügung stehende Bandbreite korreliert mit der Anzahl der zur Verfügung stehenden Recheneinheiten unten. Durch diesen Aspekt ist es möglich, dass auch einzelne Haushalte bzw. deren Speichervorrichtungen in die Infrastruktur eingebunden werden, ohne dass hierbei Engpässe bei der Bandbreite entstehen.

Eine Onlineplattform wird gemäß einem Aspekt der vorliegenden Erfindung Anbieter und Nachfrager von Speicherplatz in Form eines geregelten, transparenten Marktes zusammenführen, um nicht genutzte Kapazitäten zu vermieten.

Nicht genutzte Speicherkapazitäten auf Privat- und Unternehmensservern, sollen auf einem Markt handelbar und zugreifbar gemacht werden. Ungenutzte Kapazitäten stehen nahezu kostenlos zur Verfügung, so dass Anbieter bereit sein werden, diese an Nachfrager zu vermieten. Aus einer großen Anzahl von Anbietern wird ein Client to Peer Netzwerk aufgebaut.

Dateien werden gemäß einem Aspekt der vorliegenden Erfindung in standardisierte Pakete kleiner Größe aufgeteilt und im Netzwerk auf den Geräten der Anbieter verteilt. Durch dieses Vorgehen wird:
- verhindert, dass auf den Internetanschlüssen der Anbieter ein Engpass im Upload entsteht;
- eine Anonymität der Daten sichergestellt (das Puzzle der Datenpakete wird auf den Geräten der Nachfrager auseinander- und zusammengesetzt; und
- ein sehr schnelles Netzwerk aufgebaut, da sich die Übertragungsgeschwindigkeiten der Anbieter (im Upload) bis zum Maximum der Downloadgeschwindigkeiten der Nachfrager kumulieren.

Der Handel der Speichervolumina erfolgt gemäß einem Aspekt der vorliegenden Erfindung auf einem geregelten Markt, d.h. es werden Order in ein Orderbuch eingestellt. Die Volumina werden gemäß einem Aspekt der vorliegenden Erfindungauf beiden Seiten bestens über Stop Loss Kurse und Stop Buy Kurse ausgeführt. Es werden im Laufe der Zeit verschiedene Orderbücher angeboten, in denen Anbieter zu "Körben" zusammengefasst werden.

Diese Körbe sind geclustert anhand der Bonitäten der Anbieter. Bessere Anbieterbonitäten erzielen höhere Preise. Die Bonität der Anbieter wird anhand von Onlinezeit, Kapazität des Speichers, Kapazität der Leitung und Anzahl der Kicks (Anbieter und Nachfrager können die Volumina mit den geringsten bzw. höchsten Preisen kündigen) errechnet. Anbieter können beispielsweise frühestens nach einem Monat "kicken", das heißt ein Bereitstellen von Daten abbrechen. Jeder "kick" verschlechtert die Bonität.

Nachfrager können frei wählen, welche Bonität sie einkaufen. Sie können die Größe der Datenpakete frei wählen, die Anzahl der Spiegel (mindestens ein Spiegel) und über welche Anzahl von Peers sie verteilen möchten. Nachfrager können jederzeit "kicken".

Anbieter können einen Puffer vorhalten. Je besser die Bonität, desto größer der Puffer. Fällt ein Peer aus, springen sofort die Spiegel ein. Nach dem Ausfall eines Spiegels werden die Spiegeldateien sofort auf Puffer kopiert, so dass im peer to dient Netz so schnell wie möglich wieder ein Master und ein Spiegel bestehen.
Die Spiegeldaten werden anschließend gemäß einem Aspekt der vorliegenden Erfindungam Markt wieder bestens bis zur Höhe des Limits eingedeckt. Reicht das Limit nicht aus, wird der Nachfrager darüber informiert, dass Speicher für Spiegeldaten wieder einkaufen muss. Die Nachfrager bekommen gemäß einem Aspekt der vorliegenden Erfindung ein oder mehrere virtuelle Netzlaufwerke zur Verfügung gestellt. Auf den Geräten der Anbieter wird eine Datei abgelegt, die das gewünschte Volumen, welches Angeboten werden soll, sofort in voller Größe reserviert (incl. Puffer).

Anbieter und Nachfrager bekommen gemäß einem Aspekt der vorliegenden Erfindung ein Cockpit zur Verfügung gestellt, in dem sie ihre Käufe und Verkäufe verwalten und einsehen können. Ein solches Cockpit wird auch als Mobilapp erhältlich sein. Über das Cockpit werden von den Anbietern und Nachfrager Stop Buy Kurse für die gewünschten Volumina eingestellt. Eine direkte Ausführung der Orders durch die Kunden soll nicht angeboten werden, da es für die Kunden zu zeitaufwendig wäre.

Zielgruppe sind diejenigen Personen oder Unternehmen, die auf ihrem Server oder NAS Gerät über freien Speicher verfügen (Anbieter) und diesen an Unternehmen und Privatpersonen verkaufen (Nachfrager), die ihre Datenhaltung ausgelagert haben und nach einer Möglichkeit zu günstigen Speicherung ihrer Daten suchen. Als besonders datenintensive potenzielle Nachfrager gelten Banken, Versicherungen, Krankenhäuser, staatliche Einrichtungen (auch Forschungseinrichtungen), große Industrieunternehmen im Bereich Automobile, Chemie oder Bildverarbeitung usw. Primäre Zielgruppe sind all diejenigen, die Daten archievieren.

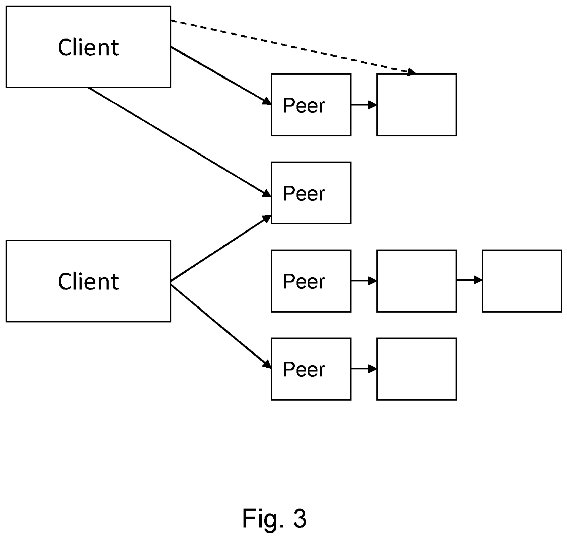

Figur 3 zeigt das vorgeschlagene Verfahren bzw. die vorgeschlagene Systemanordnung, wobei nunmehr mehrere Speicherplatz anfragende Recheneinheiten auf der linken Seite vorgesehen sind. Somit wird das Verfahren iterativ durchgeführt bzw. wird in jeder Vorrichtung auf der linken Seite durchgeführt. Generell können die zentralen Recheneinheiten auch auf gleiche Piers bzw. anbietende Recheneinheiten zugreifen.

Auf der rechten Seite in der vorliegenden Erfindung ist gezeigt, dass ein Peer bzw. eine anbietende Recheneinheiten typischerweise mindestens eine Einheit vorhält, welche ein entsprechendes Backup bereitstellt. Somit handelt es sich bei den Recheneinheiten neben den Peer-Einheiten um Spiegeleinheiten. Diese stellen ein Abbild des Speichers der jeweiligen Peer-Einheit bereit und stellen dieses Abbild bereit, falls die angesprochene Peer-Einheit ausfällt. Je nach Bedarf kann eine Recheneinheit auch mehrere Spiegeleinheiten betreiben. Die gestrichelte Linie verdeutlicht, dass bei einem Ausfall einer ersten Einheit, in der Mitte, eine weitere Einheit, auf der rechten Seite, angesprochen wird. Somit kann eine Recheneinheit ausfallen, ohne dass dies im Verfahren bzw. in der Systemanordnung bemerkt wird. Insgesamt wird also eine fehlertolerante Architektur vorgeschlagen.

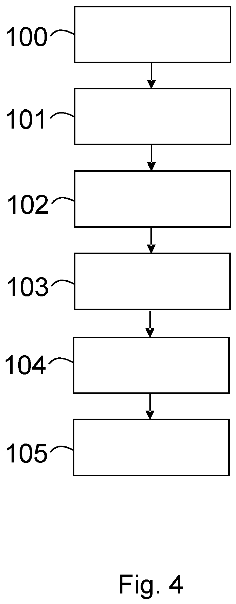

Figur 4 zeigt in einem schematischen Ablaufdiagramm ein Verfahren zur effizienten Optimierung von Speicherbelegungen und Bandbreitenausnutzungen in heterogenen und verteilten Rechnernetzwerken, aufweisend ein Abspeichern 100 einer Menge von Nutzdaten auf einer Speicherplatz anfragenden Recheneinheit, ein Segmentieren 101 der Menge von Nutzdaten zur Erzeugung von Nutzdatensegmenten, ein Identifizieren 102 einer Mehrzahl von Speicherplatz anbietenden Recheneinheiten, welche in ihrer Gesamtheit eingerichtet sind die Nutzdatensegmente abzuspeichern, ein Auslagern 103 der Nutzdatensegmente an die Speicherplatz anbietenden Recheneinheiten, derart, dass die Menge von Nutzdaten in dem Rechnernetzwerk verteilt abgespeichert wird und kollektives Übermitteln 105 der Nutzdatensegmente von den Speicherplatz anbietenden Recheneinheiten an die Speicherplatz anfragende Recheneinheiten auf deren Anfrage 104 zur Wiederherstellung der Menge von Nutzdaten.

Der Fachmann erkennt, dass die beschriebenen Verfahrensschritte iterativ und/oder in einer anderen Reihenfolge ausgeführt werden können. Zudem können einzelne Verfahrensschritte Unterschritte aufweisen.

## Patentansprüche

1. Verfahren zur effizienten Optimierung von Speicherbelegungen und Bandbreitenausnutzungen in heterogenen und verteilten Rechnernetzwerken, aufweisend:
- Abspeichern (100) einer Menge von Nutzdaten auf einer Speicherplatz anfragenden Recheneinheit;
- Segmentieren (101) der Menge von Nutzdaten zur Erzeugung von Nutzdatensegmenten;
- Identifizieren (102) einer Mehrzahl von Speicherplatz anbietenden Recheneinheiten, welche in ihrer Gesamtheit eingerichtet sind die Nutzdatensegmente abzuspeichern;
- Auslagern (103) der Nutzdatensegmente an die Speicherplatz anbietenden Recheneinheiten, derart, dass die Menge von Nutzdaten in dem Rechnernetzwerk verteilt abgespeichert wird; und
- kollektives Übermitteln (105) der Nutzdatensegmente von den Speicherplatz anbietenden Recheneinheiten an die Speicherplatz anfragende Recheneinheiten auf deren Anfrage (104) zur Wiederherstellung der Menge von Nutzdaten.

2. Verfahren nach Anspruch 1, **dadurch gekennzeichnet, dass** eine verfügbare Bandbreite in einer Kommunikationsrichtung von der Speicherplatz anfragenden Recheneinheit zu der Speicherplatz anbietenden Recheneinheit größer ist als eine weitere verfügbare Bandbreite in einer Kommunikationsrichtung von der Speicherplatz anbietenden Recheneinheit zu der Speicherplatz anfragenden Recheneinheit.

3. Verfahren nach Anspruch 1 oder 2, **dadurch gekennzeichnet, dass** die Nutzdatensegmente verschlüsselt und/ oder unverschlüsselt übermittelt werden.

4. Verfahren nach einem der vorhergehenden Ansprüche, **dadurch gekennzeichnet, dass** die Nutzdatensegmente randomisiert aus der Menge von Nutzdaten erzeugt werden.

5. Verfahren nach einem der vorhergehenden Ansprüche, **dadurch gekennzeichnet, dass** das Identifizieren (102) der Mehrzahl von Speicherplatz anbietenden Recheneinheiten derart erfolgt, dass die einzelnen Recheneinheiten anhand einer Metrik bewertet werden.

6. Verfahren nach Anspruch 5, **dadurch gekennzeichnet, dass** die Metrik Onlinezeit, verfügbaren Speicherplatz, Bandbreite und/ oder eine Anzahl von Übertragungsabbrüchen evaluiert.

7. Verfahren nach einem der vorhergehenden Ansprüche, **dadurch gekennzeichnet, dass** vor einem Auslagern (103) der Nutzdatensegmente ein Speicherplatz auf der jeweiligen Speicherplatz anbietenden Recheneinheiten reserviert wird, der einer Größe des auszulagernden Nutzdatensegments entspricht.

8. Verfahren nach einem der vorhergehenden Ansprüche, **dadurch gekennzeichnet, dass** für jede Speicherplatz anbietende Recheneinheit mindestens eine spiegelnde Recheneinheit vorgesehen ist.

9. Verfahren nach einem der vorhergehenden Ansprüche, **dadurch gekennzeichnet, dass** bei einem Ausfall einer Recheneinheit eine weitere Recheneinheit adressiert wird.

10. Verfahren nach einem der vorhergehenden Ansprüche, **dadurch gekennzeichnet, dass** die Nutzdatensegmente zwischen Speicherplatz anbietenden Recheneinheiten weiter gegeben werden können.

11. Verfahren nach einem der vorhergehenden Ansprüche, **dadurch gekennzeichnet, dass** eine Speicherplatz anbietende Recheneinheit mindestens ein Nutzdatensegment abspeichert.

12. Verfahren nach einem der vorhergehenden Ansprüche, **dadurch gekennzeichnet, dass** die Speicherplatz anfragende Recheneinheit als ein Client und die Speicherplatz anbietenden Recheneinheiten jeweils als ein Peer implementiert sind.

13. Netzwerkprotokoll mit Steuerbefehlen, welche das Verfahren gemäß einem der vorhergehenden Ansprüche in einem verteilten Netzwerk ausführen.

14. Systemanordnung zur effizienten Optimierung von Speicherbelegungen und Bandbreitenausnutzungen in heterogenen und verteilten Rechnernetzwerken, aufweisend:
- eine Schnittstelleneinheit eingerichtet zum Abspeichern (100) einer Menge von Nutzdaten auf einer Speicherplatz anfragenden Recheneinheit;
- eine Segmentierungseinheit eingerichtet zum Segmentieren (101) der Menge von Nutzdaten zur Erzeugung von Nutzdatensegmenten;
- einer Vermittlungseinheit eingerichtet zum Identifizieren (102) einer Mehrzahl von Speicherplatz anbietenden Recheneinheiten, welche in ihrer Gesamtheit eingerichtet sind die Nutzdatensegmente abzuspeichern;
- ein Netzwerk eingerichtet zum Auslagern (103) der Nutzdatensegmente an die Speicherplatz anbietenden Recheneinheiten, derart, dass die Menge von Nutzdaten in dem Rechnernetzwerk verteilt abgespeichert wird; und
- das Netzwerk eingerichtet zum kollektiven Übermitteln (105) der Nutzdatensegmente von den Speicherplatz anbietenden Recheneinheiten an die Speicherplatz anfragende Recheneinheiten auf deren Anfrage (104) zur Wiederherstellung der Menge von Nutzdaten.

15. Computerprogrammprodukt mit Steuerbefehlen, welche das Verfahren gemäß einem der Ansprüche 1 bis 12 ausführen, wenn sie auf einem Computer zur Ausführung gebracht werden.
